(19) Europäisches Patentamt
European Patent Office
Office européen des brevets

(11) Publication number: 0 355 997 B1

(12) EUROPEAN PATENT SPECIFICATION

(45) Date of publication of patent specification: 15.09.93

(51) Int. Cl.5: C08F 10/00, C08F 4/34, C08F 2/38

(21) Application number: 89307377.5

(22) Date of filing: 20.07.89

# (54) Polymerisation process and catalyst system therefor.

(30) Priority: 26.07.88 US 224370
04.04.89 US 333024

(43) Date of publication of application:
28.02.90 Bulletin 90/09

(45) Publication of the grant of the patent:
15.09.93 Bulletin 93/37

(84) Designated Contracting States:
BE DE FR GB IT NL

(56) References cited:
EP-A- 0 206 756
US-A- 3 956 248
US-A- 4 051 312

(73) Proprietor: POLYSAR LIMITED
1265 Vidal Street S.
Sarnia Ontario N7T 7M2(CA)

(72) Inventor: Mishra, Munmaya Kumar
5644 Williamsburg Circle
Hudson Ohio 44236(US)
Inventor: Osman, Akhtar
11-1250 Wellington Street
Clearwater Ontario N7S 5P4(CA)

(74) Representative: Perry, Robert Edward et al
GILL JENNINGS & EVERY, Broadgate House,
7 Eldon Street
London EC2M 7LH (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

### FIELD OF THE INVENTION

The present invention relates to a polymerization process for producing a terminally functional polymer.

### BACKGROUND OF THE INVENTION

Terminally functional polymers are of great interest in that they may serve as precursors to the production of graft or block copolymers. Graft or block copolymers are of interest because they represent a way in which two different and incompatible polymers' segments may be compatibilized. Thus, it would be advantageous to develop a process whereby a terminally functional polymer may be simply produced.

### DESCRIPTION OF THE PRIOR ART

Kennedy has developed a series of initiator-transfer agents, "inifers", to be used as initiators for the synthesis of terminally functional, "telechelic", polymers of isobutylene. The "inifer" is capable of (i) participating in initiation during the polymerization reaction; and (ii) participating in the process of chain transfer to the "inifer". Thus, the "inifer" when used in conjunction with a Lewis acid can be used to conduct carbocationic polymerization of isobutylene to produce a terminally functional polymer. Kennedy's preferred group of "inifer" appears to be $AY_n$,wherein: A is an aryl moiety, Y is $-C(CH_3)_2Cl$ and n is an integer of from 1 to 4. The "telechelic" polymers produced by using the "inifer" retain the group A terminally (in the case of n = 1) or within the polymer backbone (in the case of n = 2, 3 or 4) and the tertiary chlorine group terminally. For a more detailed discussion of these "inifers"; see US-A-4276394 and US-A-4524188.

The tertiary chlorine-ended "telechelic" polymers described above may be used as precursors for the synthesis of a variety of functionalities at the polymer termini. For a more detailed discussion of these polymers and their production, see US-A-4316973 and US-A-4342849.

Kennedy further discloses, in EP-A-0206756, that a "living" catalyst system comprising an organic acid (or its ester) and Lewis acid may suitably be used to produce a polymer of isobutylene (or a copolymer of isobutylene and isoprene) having functional end groups.

In Polymer Bulletin 20, pages 413-319 (1988), Kennedy et al further disclose that the use of certain types of electron pair donors with a "living" catalyst system enables a polyisobutylene with a well-defined narrow molecular weight distribution to be synthesised.

US-A-4051312 discloses, in Example 4, the sequential introduction of 0.5 mol ethyl acrylate, 30 mmol $EtAlCl_2$, 2 mmol $VOCl_3$, 1 mol isobutylene, 1 mmol lauroyl peroxide and 6.5 mmol butadiene, and polymerisation.

### SUMMARY OF THE INVENTION

According to the present invention, a living cationic polymerisation process for producing a terminally-functional polymer, comprises polymerising, at 0 to -80 °C, a monomer charge comprising isobutylene, in the presence of a Lewis acid and, in an amount of from $10^{-4}$ to $10^{-1}$ moles per mole of the isobutylene, an organic peroxy compound.

### DETAILED DESCRIPTION OF THE INVENTION

The present invention provides a process for the production of a terminally functional polymer. In developing this process we have discovered a novel catalyst system which can be used to conduct living polymerization. The term "living polymerization" as used herein is defined as a polymerization which is theoretically terminationless and is not susceptible to chain transfer.

Specifically, we provide a catalyst system which comprises (i) a Lewis acid and (ii) an organic peroxy compound.

A number of Lewis acids are suitable for use in the process disclosed herein. Non-limiting examples include $BCl_3$, $BF_3$, $AlCl_3$, $SnCl_4$, $TiCl_4$, $SbF_5$, $SeCl_3$, $ZnCl_2$, $FeCl_3$ and $VCl_4$. The preferred Lewis acids for use in the present invention are $BCl_3$ and $TiCl_4$.

Generally, the organic peroxy compound suitable for use in the process disclosed herein may be selected from the group comprising organic peroxides and hydroperoxides, peroxy carbonates, azo peroxy

compounds and peroxy esters.

Illustrative non-limiting examples of suitable organic peroxides and hydroperoxides include 1,1,3,3-tetramethylbutyl hydroperoxide; t-butyl hydroperoxide; cumene hydroperoxide; 2,5-dimethyl-2,5-di(t-butyl peroxy)hexane; di(t-butyl) peroxide; 2,5-dimethyl-2,5-di(t-butylperoxy)hexyne-3; benzol peroxide; t-butyl cumyl peroxide; di(cumylperoxide); t-amyl hydroperoxide; 2,5-di(hydroperoxy)-2,5-dimethylhexane; 3,3-dimethyl-2-methylhydroperoxybutene-1; 2,7-di(hydroperoxy)-2,7-dimethyloctane; diphenylhydroperoxymethane; benzylhydroperoxide; p-methylhydroperoxytoluene; p-dicumyl dihydroperoxide; 1-isopropyl-3,5-dicumyl dihydroperoxide; cumylmethyl peroxide; triphenyl methyl hydroperoxide and bis-(m-2-hydroperoxy-2-propyl-α-cumyl) peroxide. Non-limiting examples of suitable peroxy carbonates include o,o-t-butyl-o-isopropylmonoperoxycarbonate and o,o-t-butyl-o-(2-ethylhexyl)monoperoxycarbonate. A non-limiting example of a suitable azo peroxy compound is t-butylperoxy-4-t-butylazo-4-cyanovalerate. Non-limiting examples of suitable peroxy esters include α-cumylperoxypivalate, α-cumylperoxy-neoheptanoate and 2,5-dimethyl-2,5-bis(benzoylperoxyhexane).

Preferably, the organic peroxy compound for use in the process described herein is selected from the group comprising t-butyl hydroperoxide, cumene hydroperoxide; p-dicumyl dihydroperoxide, triphenyl methyl hydroperoxide and 2,5-dimethyl-2,5-bis(benzoylperoxyhexane). Most preferably, the organic peroxy compound is selected from one of the cumene hydroperoxide, p-dicumyl dihydroperoxide and 2,5-dimethyl-2,5-bis(benzoylperoxyhexane).

The amount of Lewis acid used relative to the amount of peroxy compound is not particularly critical. However, in order to be able to achieve more readily a polymer of desired molecular weight, it is preferred that the mole amount of Lewis acid used is equal to or greater than the mole amount of peroxy compound used. Generally, it is preferred to use from 2 to 50, most preferably from 3 to 40, moles of Lewis acid per mole of peroxy compound. The concentration of peroxy compound used depends upon the molecular weight desired in the resultant polymer as hereinafter described and is within the range of from $10^{-4}$ to $10^{-1}$ moles per mole of monomer except where incremental addition of monomer is used when the ratio of peroxy compound to monomer is still applicable for the initial monomer concentration.

The monomer charge suitable for use in the process of the present invention comprises isobutylene. In a preferred embodiment, the monomer charge in addition to comprising isobutylene, may further comprise a $C_4$ to $C_8$ conjugated diolefin, the amount of such conjugated diolefin being up to 50 mole percent of the total monomer charge and preferably up to 10 mole percent of the total monomer charge. In another preferred embodiment, the monomer charge in addition to comprising isobutylene, may further comprise a $C_8$ to $C_{20}$ vinylidene aromatic monomer, in an amount up to 20 mole percent of the total monomer charge. In yet another preferred embodiment, the monomer charge comprises isobutylene, a $C_4$ to $C_8$ conjugated diolefin and a $C_8$ to $C_{20}$ vinylidene aromatic monomer. The preferred conjugated diolefin is isoprene. The vinylidene aromatic monomer may be substituted or unsubstituted. The preferred vinylidene aromatic monomer is selected from the group comprising styrene, α-methyl styrene and p-methyl styrene.

Block copolymers may also be synthesized in accordance with the process of this invention by the sequential addition of isobutylene and a second monomer selected from the group consisting of conjugated diolefins and vinylidene aromatic monomers. In a preferred embodiment the monomer charge may comprise the sequential addition of isobutylene and a $C_4$ to $C_8$ conjugated diolefin, the amount of such conjugated diolefin being up to 60 mole percent of the total monomer charge. In another preferred embodiment, the monomer charge may comprise the sequential addition of isobutylene and a $C_8$ to $C_{20}$ vinylidene aromatic monomer, the amount of such vinylidene aromatic monomer being up to 60 mole percent of the total monomer charge. The preferred conjugated diolefin is isoprene. The vinylidene aromatic monomer may be substituted or unsubstituted. The preferred vinylidene monomer is selected from the group consisting of styrene, p-methylstyrene, 2,4,6-trimethylstyrene and indene.

In another embodiment of the present invention the process may further comprise the addition of an electron donor that has an electron donor number of at least 22 to no more than 50 to produce a terminally functional polyisobutylene as hereinafter described having a ratio of weight average molecular weight to number average molecular weight of no more than 1.6. For the purposes of the present invention the donor number is defined as the molar enthalpy value for the reaction of the electron donor with $SbCl_5$ as a reference acceptor in a $10^{-3}$M solution of dichloroethane and is a measure of the tendency of the electron donor to share its electrons with the acceptor. Some typical electron donors and their donor acceptor numbers are tabulated by Viktor Gutman in "The Donor-Acceptor Approach to Molecular Interactions", Plenum Press (1978). Preferably, the electron donor for use in the process described herein is selected from the group consisting of dimethylsulfoxide and diethylene glycol dimethyl ether (diglyme). Another electron donor that is preferred for use in the process described herein is tetrahydrothiophene whose electron donor number is not presently known to us. The amount of electron donor used relative to the

amount of peroxy compound and relative to the amount of Lewis acid is important. For, if too large an amount of the electron donor is used, the polymerization process will be slowed down markedly or will be terminated far below quantitative conversion, and if too small an amount of the electron donor is used, there be little or no reduction in the undesirable side reactions that give rise to the broad polydispersity. It is preferred that the mole amount of electron donor used is from $2 \times 10^{-1}$ to 3 moles per mole of peroxy compound. Furthermore it is desirable that the total of the number of moles of electron donor and number of moles of peroxy compound is less than the number of moles of Lewis acid.

When an electron donor is used in the process of the present invention and the monomer charge comprises the sequential addition of isobutylene and a second monomer selected from the group consisting of conjugated diolefins and vinylidene aromatic monomers, block copolymers which have a ratio of weight average molecular weight to number average molecular weight of no more than about 1.8 are produced. An additional advantage in using an electron donor in said process for producing block copolymers is that there is a considerable reduction in the amount of homopolymer found relative to that formed when an electron donor is not used.

These aforementioned benefits that result from the use of an electron donor in the process described herein, are most marked when the peroxy compound of said process is selected from the group consisting of organic peroxides and hydroperoxides. Preferably the organic peroxy compound is selected from the group consisting of t-butyl hydroperoxide, cumene hydroperoxide and p-dicumyl dihydroperoxide; most preferably the organic peroxy compound is selected from one of the cumene hydroperoxide and p-dicumyl dihydroperoxide.

Somewhat surprisingly it has been found that there is little advantage to be gained in using an electron donor in the process of the present invention when the peroxy compound of said process is selected from the group consisting of peroxy esters and peroxy carbonates. The terminally functional polymer produced in said process has a ratio of weight average molecular weight to number average molecular weight of no more than 1.4. Moreover, when the monomer charge of said process comprises the sequential addition of isobutylene and a second monomer selected from the group consisting of conjugated diolefins and vinylidene monomers, block copolymers which have a polydispersity of no more than 1.8 are produced and there is very little formation of homopolymer. Thus in order that a terminally functional polymer of narrow molecular weight distribution may be produced by the process disclosed herein without resorting to the use of an electron donor, it is preferred that the organic peroxy compound be selected from the group consisting of α-cumylperoxypivalate, α-cumylperoxyneoheptanoate, 2,5-dimethyl-2,5-bis-(benzoylperoxyhexane), o,o-t-butyl-o-isopropylmonoperoxycarbonate and o,o-t-butyl-o-(2-ethylhexyl) monoperoxycarbonate; and it is particularly preferred that the organic peroxy compound be 2,5-dimethyl-2,5-bis-(benzoylperoxyhexane).

The process described herein is capable of being conducted at a temperature of from 0° to -80°C, preferably from 0° to -50°C. Thus a terminally functionalized analogue of butyl rubber may be produced in accordance with the process described herein at temperatures which would substantially reduce the refrigeration costs associated with the operation of a conventional commercial butyl rubber plant in which the copolymers are typically produced by polymerization at temperatures as low as -100°C in the presence of an aluminium chloride catalyst. When the monomer charge of the process described herein comprises the sequential addition of isobutylene and a second monomer selected from the group consisting of conjugated diolefins and vinylidene aromatic monomers it is preferable that the polymerization process is carried out at a temperature of from -40°C to -80°C. Similarly, when an electron donor is used in the process of the present invention to minimize size reactions, it is preferable that the process is conducted at a temperature of from -40°C to -80°C no matter whether the monomer charge comprises a single monomer or the sequential addition of monomer.

The process according to the present invention may be conducted in the presence or absence of a diluent. Preferably, the process is conducted in the presence of a diluent. Preferred diluents include (i) $C_1$ to $C_4$ halogenated hydrocarbons, most preferably selected from methyl chloride and methylene dichloride, (ii) $C_5$ to $C_8$ aliphatic hydrocarbons, most preferably selected from the group consisting of pentane, hexane and heptane and (iii) $C_5$ to $C_{10}$ cyclic hydrocarbons, most preferably selected from one of cyclohexane and methylcyclohexane, or mixtures of such halogenated hydrocarbons, or mixtures of such a halogenated hydrocarbon and such an aliphatic hydrocarbon or mixtures of such a halogenated hydrocarbon and such a cyclic hydrocarbon.

The order of addition of the peroxy compound, Lewis acid, diluent (if present) and monomer charge is not particularly critical. In a preferred embodiment, the components are added in the following order: diluent (if present), monomer charge, peroxy compound, and Lewis acid. When the monomer charge of the process disclosed herein comprises the sequential addition of isobutylene and a second monomer selected

from the group consisting of conjugated diolefins and vinylidene aromatic monomers it is preferred that the components are added in the following order: diluent (if present), isobutylene charge, peroxy compound, and Lewis acid; the aforesaid second monomer being added only when all the isobutylene has been consumed. When the process disclosed herein further comprises an electron donor it is preferred that the order of addition of the components is as follows: diluent (if present), monomer charge, peroxy compound, electron donor and Lewis acid.

Although not essential, it is preferred to agitate the reaction during the polymerization process, especially if a terminally functional polymer with a relatively narrow molecular weight distribution is desired. Such agitation can be achieved using conventional mixing means and serves to (i) create a homogeneous mixture of reactants and (ii) to dissipate the exothermic heat of reaction.

The terminally functional polymers produced in the present of a diluent according to the process disclosed herein may be recovered by conventional techniques used to recover rubbery polymers. Such techniques include, for the higher molecular weight polymers, contacting the polymer-diluent solution or slurry with copious amounts of hot water thereby flashing off the diluent and any unreacted monomer. The polymer-hot water slurry may then be passed over a screen or filter to recover the polymer which may be passed through a tunnel dryer or drying extruder. In another such technique, especially for polymers produced in the presence of a diluent and having a number average molecular weight ($M_n$) of less than 30,000 the polymer is recovered by (i) contacting the polymer-diluent solution or slurry with steam or by applying a vacuum to the polymer-diluent solution or slurry to flash off the diluent and any unreacted monomer; (ii) extracting acidic impurities and any remaining high boiling diluents with methanol; and (iii) drying the purified polymer to remove traces of methanol. In yet another technique, especially for low molecular weight polymers, the polymer-diluent solution is contacted with excess water to remove inorganic residues, the solution is dried and the diluent is then removed, as by evaporation.

The products produced according to the process described herein are halogen terminated polymers. While not wishing to be bound by any particular theory we believe that the polymerization mechanism associated with the process disclosed herein involves the opening of the bond between the alkyl group and oxygen of the peroxy compound, subsequently followed by monomer (in this case isobutylene) insertion. Specifically, the reaction most probably occurs according to the following illustrative equation:

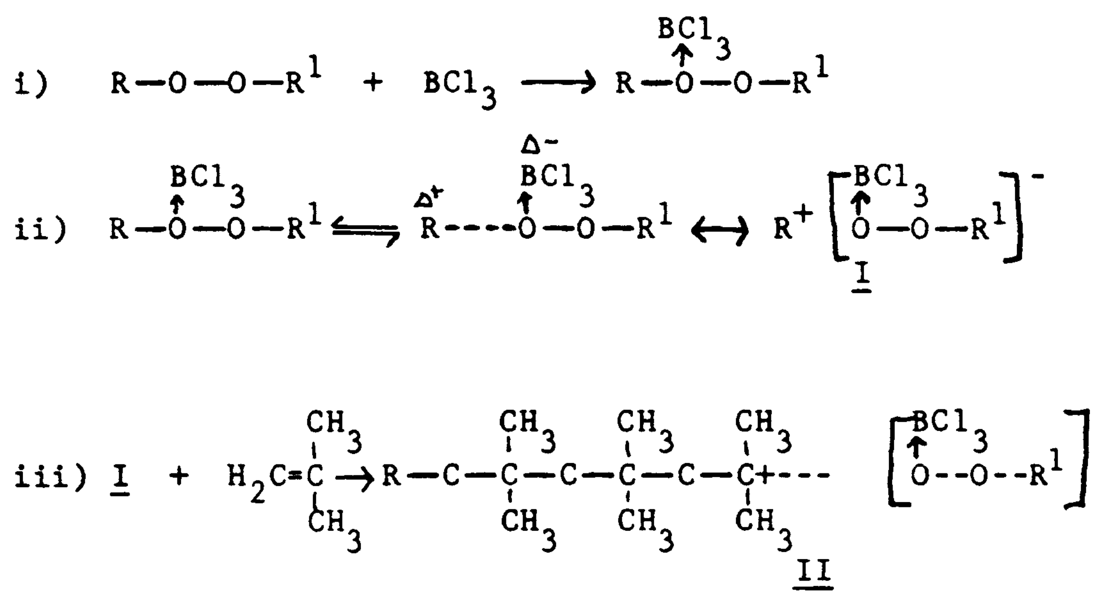

wherein R and $R^1$ may be the same or different, and may be aromatic or aliphatic, or $R^1$ may be aromatic or aliphatic, or $R^1$ may be hydrogen. Although the reaction which occurs during the process of the present invention is believed to be an essentially living polymerization, and thus theoretically terminationless, termination of the reaction can be achieved by the addition of a strong nucleophilic compound or simply by raising the process temperature. Termination of the reaction is believed to occur according to the following illustrative equation:

II

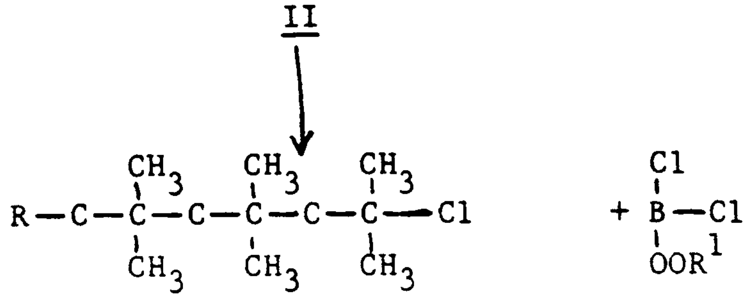

III

In this specific example, the product III is a chlorine terminated polymer of isobutylene. The by-product $BCl_2$ ($OOR^1$) is converted to other products and may be removed during the recovery of the polymer.

When the process disclosed herein further comprises an electron donor we believe that the polymerization mechanism associated with the process most probably involves the formation of a complex between the peroxy moiety of the organic peroxy compound, the Lewis acid and the electron donor. The formation of such a complex renders the incipient gegenion (I) more nucleophilic and thus more able to stabilize the propagating carbocation. In this manner the tendency for the growing chain to undergo chain transfer and intramolecular alkylation is reduced and a narrower molecular weight distribution ensues.

We further believe that when the organic peroxy compound used in the process disclosed herein is a peroxy ester or a peroxy carbonate the carbonyl group adjacent to the peroxy moiety in the peroxy ester or in the peroxy carbonate functions as an internal electron donor in that the carbonyl group together with the peroxy moiety form a complex with the Lewis acid and thereby increase the nucleophilicity of the incipient gegenion (I). As a consequence the gegenion so formed is more able to stabilize the propagating carbocation and reduce its tendency to undergo undesirable side reactions.

In the case of copolymerization, for example of isobutylene and isoprene, in accordance with the process disclosed herein, the product would be a halogen, preferably chlorine, terminated polymer in which a small number of reacted isoprene units would be randomly distributed throughout the polyisobutylene backbone.

In the case of the formation of block copolymers by the sequential addition of monomer, for example, isobutylene and styrene, in accordance with the process disclosed herein, the product would be a polymer as illustrated below.

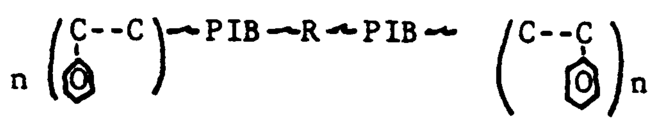

The molecular weight (i.e. the number average molecular weight $M_n$) of the polymer produced in the present process may be varied from as low as 500 to as high as one million or more. Desirably, $M_n$ is from 1,000 to 750,000. The molecular weight may be controlled by the ratio of the initial monomer concentration to the initial peroxy compound concentration. However, once the polymer has initially been produced, it is also possible to add further monomer which will polymerize to yield a higher molecular weight polymer that may be a homopolymer, a random copolymer or a block copolymer.

The present invention will now be illustrated by the following non-limiting examples.

EXAMPLE I

A series of pressure tube experiments were conducted by charging each tube with a specific amount of each of a diluent, initiator and monomer at a temperature of -30 °C. The polymerization was initiated by the addition of pure Lewis acid co-catalyst, in this case $TiCl_4$. The polymerization was observed as being extremely rapid; that is, the reaction appeared to be over in a few minutes based on conversion

calculations. To ensure that the polymerization was complete, the pressure tubes were left undisturbed for 30 minutes, after which the reaction was quenched by the addition of 5 ml of methanol (MeOH). The resultant polymers were recovered by successive evaporation of volatiles, dissolution in n-hexane, decantation or filtration of inorganic residues such as Lewis acid residues and removal of hexane by evaporation at room temperature. The resultant polymers were characterized by spectroscopic techniques such as IR, ultraviolet and $^1$H NMR; osmometry, DSC and GPC techniques were also used.

The polymerization reaction parameters and the physical properties of the resultant polymers are provided in Table 1. The results indicate that t-butyl hydroperoxide (t-BHP) is suitable as an initiator for the production of terminally functional polymers. After analyzing the product by $^1$H NMR it was determined that the polymers contained the tert-butyl head group and the polymers contained the tert-butyl head group and the tert-chloro end groups as shown by the following formula:

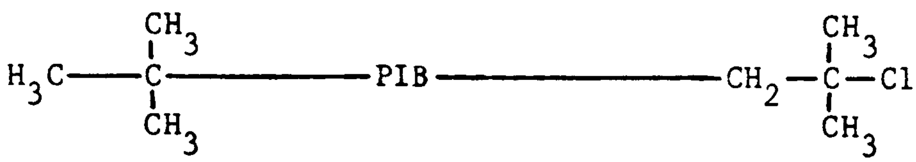

wherein PIB represents the polyisobutylene backbone.

TABLE 1

Monomer = isobutylene (IB); $9.1 \times 10^{-3}$ mole
Initiator = t-BHP; $1.28 \times 10^{-4}$ mole
Lewis acid = $TiCl_4$; $1.37 \times 10^{-3}$ mole
Diluent = $CH_3Cl$; 35 mL

| Expt. # | Conv. % | Mn | Mw | Mw/Mn |
|---|---|---|---|---|
| 1 | 100 | 3000 | 13300 | 4.4 |
| 2 | 100 | 3100 | 12800 | 4.1 |

EXAMPLE 2

Using the same experimental procedure as outlined in Example 1, another series of experiments was conducted using cumene hydroperoxide (CHP) as the initiator. The polymerization temperature was varied from -30° to -50°C. The polymerization parameters and physical properties of the resultant polymers are provided in Table 2.

TABLE 2

| Expt. # | $CH_3Cl$ mL | Hexane mL | IB mole $x10^2$ | CHP mole $x10^5$ | $TiCl_4$ mole $x10^4$ | Temp - °C | Conv % | Mn (GPC) | Mw/Mn |
|---|---|---|---|---|---|---|---|---|---|
| 1 | 50 | -- | 7.05 | 178.5 | 45.5 | 45 | 92 | 1900 | 1.8 |
| 2 | 500 | -- | 8.9 | 178.5 | 346.5 | 50 | 100 | 2500 | 2.5 |
| 3 | 35 | 15 | 3.6 | 8.5 | 27.35 | 50 | 92 | 22325 | 2.8 |
| 4 | 35 | 15 | 3.6 | 4.2 | 27.35 | 50 | 98 | 37000 | 2.7 |
| 5 | 25 | 25 | 1.85 | 4.2 | 18.2 | 50 | 99 | 29625 | 3.3 |
| 6 | 25 | 25 | 3.65 | 4.2 | 18.2 | 50 | 96 | 42275 | 3.6 |
| 7 | 35 | -- | 1.01 | 12.6 | 9.1 | 30 | 82 | 3250 | 1.6 |

The results indicate that cumene hydroperoxide is a suitable initiator for the production of terminally functionalized polymers. The molecular weight of the polymer is approximately given by the expression

$(Mo/Io) \times IB_M$

where Mo is the initial concentration of monomers, Io is the initial concentration of peroxy compound and $IB_M$ is the molecular weight of the monomer.

Using suitable analytical techniques the product was determined to be the following:

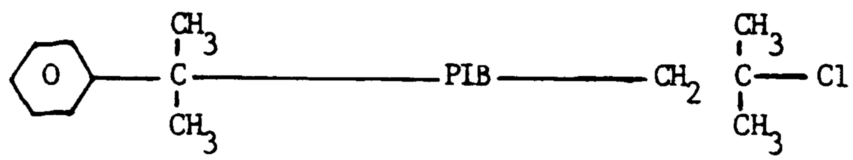

wherein PIB represents the polyisobutylene backbone.

EXAMPLE 3

Using the same experimental procedure as outlined in Example 1, another series of experiments was conducted at -30 °C at various monomer concentrations and in a mixed diluent system. The initiator used was cumene hydroperoxide (CHP). The polymerization conditions and physical properties of the resulting polymers are provided in Table 3.

## TABLE 3

Monomer = isobutylene (IB); as stated, mole
Initiator = CHP; $4.5 \times 10^{-5}$ mole
Lewis acid = $TiCl_4$ $2.1 \times 10^{-4}$ mole
Diluent = $CH_3Cl$ and Hexane mixture;
35 mL: 25mL $CH_3Cl$ + 10 mL Hexane

| Expt. # | IB, g | IB mole $\times 10^2$ | conv. % | Mn | Mw/Mn | $DP_n$ $\times 10^{-2}$ (calc'd) |
|---|---|---|---|---|---|---|
| 1 | 0.66 | 1.18 | 100 | 13525 | 3.57 | 2.41 |
| 2 | 1.05 | 1.87 | 100 | 18600 | 3.70 | 3.32 |
| 3 | 1.58 | 2.82 | 100 | 40750 | 2.50 | 7.27 |
| 4 | 2.54 | 4.53 | 100 | 54675 | 2.60 | 9.76 |

The number average degree of polymerization ($DP_n$) was calculated, for each experiment, according to the following equation:

$DP_n$ = Mn of polymer/molecular weight of isobutylene. A plot of $1/DP_n$ vs $1/[M_o]$, which is also known as a "Mayo plot" was constructed using the data in Table 3. The plot yielded a straight line going through the origin which illustrates that the polymerization reaction is essentially a living polymerization.

EXAMPLE 4

To further illustrate the living nature of the polymerization process disclosed herein, a series of polymerization experiments were conducted wherein additional quantities of monomer were added incrementally to reactions which already contained polymer.

Specifically, the experiments were conducted in a series of pressure tubes, each of which were charged, successively, with 35 mL $CH_3Cl$, cumene hydroperoxide (CHP; $1.0 \times 10^{-4}$ mole) and about 0.5g isobutylene (IB). The charged tubes were then allowed to thermoequilibriate at a temperature of -30 °C. Polymerization was initiated by introducing $5.5 \times 10^{-3}$ mole of liquid $BCl_3$ into each of the test tubes. After 45 minutes reaction time, the reaction in the first of the test tubes (Experiment #1) was quenched by the addition of 5 mL of prechilled methanol. An additional amount of about 0.5g IB was charged into each of the remaining tubes. After 45 minutes, the reaction in the second tube (Experiment #2) was quenched by the addition of methanol. An additional amount of about 0.5 g IB was charged into each of the remaining tubes (i.e. Experiments #3, #4, #5 and #6; 1.17 g IB was inadvertently added to Experiment #3). This type of experimentation is sometimes referred to as "incremental polymerization".

This procedure was repeated until the polymerization reaction in each of the pressure tubes had been quenched. After conventional workup, the amount of polymer and its molecular weight and molecular weight distribution were determined. These data are given in Table 4. A plot of the Mn of the polymer vs the weight of polymer produced yielded a straight line passing through the origin which is indicative of living polymerization having occurred.

TABLE 4

| Expt. # | IB added, g | Mn | Mw/Mn | Polymer formed, g |
|---|---|---|---|---|
| 1 | 0.53 | 5850 | 4.0 | 0.47 |
| 2 | 0.49 + 0.52 | 8650 | 2.7 | 0.85 |
| 3 | 0.54 + 0.41 + 1.17 | 12225 | 2.9 | 1.23 |
| 4 | 0.55 + 0.47 + 0.62 + 0.46 | 12575 | 2.6 | 1.41 |
| 5 | 0.60 + 0.62 + 0.53 + 0.55 + 0.53 | 15150 | 2.4 | 1.71 |
| 6 | 0.54 + 0.55 + 0.47 + 0.48 + 0.61 + 0.59 | 16750 | 2.5 | 1.70 |

Example 5

A series of experiments similar to the one described in Example 4 was conducted using a mixed diluent system and $TiCl_4$ as the co-initiator. The reactions were allowed to proceed for 30 minutes between incremental additions of isobutylene. The reaction parameters and physical properties of the polymers produced are provided in Table 5. A plot of the Mn of the polymer produced vs the weight of polymer produced yielded a straight line passing through the origin which is indicative that the polymerization process conducted in this example is living in nature.

**TABLE 5**

Monomer = isobutylene (IB)
Initiator = CHP; $4.5 \times 10^{-5}$ mole
Lewis acid = $TiCl_4$; $2.1 \times 10^{-4}$ mole
Diluent = $CH_3Cl$ and Hexane mixture;
35 mL: 25 mL $CH_3Cl$+10 mL Hexane

TABLE 5 (continued)

| Expt. # | IB added, g | Mn | Mw/Mn | Polymer formed, g |
|---|---|---|---|---|
| 1 | 1.07 | 12000 | 3.10 | 0.61 |
| 2 | 0.55+0.66 | 17950 | 2.98 | 1.01 |
| 3 | 0.48+0.60+0.60 | 26700 | 2.19 | 1.38 |
| 4 | 0.54+0.53+0.44+0.56 | 28875 | 2.17 | 1.49 |
| 5 | 0.54+0.54+0.57+0.55+0.55 | 36950 | 2.16 | 1.77 |

EXAMPLE 6

In this Example, a series of experiments were conducted to produce terminally functionalized copolymers of isobutylene and isoprene. A series of pressure tubes were charged each with 25 mL of $CH_3Cl$ or $CH_2Cl_2$ (as indicated), a specific amount of isobutylene and isoprene, and cumene hydroperoxide (CHP), at a temperature of -40 °C. The copolymerizations were initiated by the addition of pure $TiCl_4$ and were allowed to proceed at -40 °C for 40 minutes with agitation of the pressure tubes. The reactions were then quenched by the addition of 5 mL of prechilled methanol. The product polymers were recovered in a manner similar to that described in Example 1. Characterization of the polymers was as hereinbefore described.

The polymerization reaction parameters and the properties of the polymers are provided in Table 6. The results indicate that CHP is suitable for use as an initiator in the production of terminally functional copolymers of isobutylene and isoprene.

TABLE 6

Monomer = isobutylene; M1 = $1.8 \times 10^{-2}$ mole
= isoprene; M2 = as stated, mole
Initiator = CHP; $2.1 \times 10^{-4}$ mole
Lewis acid = $TiCl_4$; $1.8 \times 10^{-3}$ mole
Diluent = $CH_3Cl$ for Expt. 1, 2 and 3 (25 mL)
$CH_2Cl_2$ for Expt. 4, 5, 6 and 7 (25 mL)

| Expt. # | M2, $\times 10^4$ | M2 in feed mole % | conv. % | Mn | Mw/Mn | Isoprene in the polymer mole % |
|---|---|---|---|---|---|---|
| 1 | 10.25 | 5.85 | 94 | 2500 | 2.1 | 4.0 |
| 2 | 20.5 | 11.88 | 94 | 1925 | 2.1 | 7.3 |
| 3 | 41.0 | 22.16 | 100 | 1625 | 2.1 | 13.4 |
| 4 | 4.5 | 2.35 | 92 | 3125 | 2.4 | 1.7 |
| 5 | 10.25 | 5.54 | 95 | 2450 | 2.4 | 3.9 |
| 6 | 20.5 | 11.38 | 95 | 2000 | 2.4 | 6.3 |
| 7 | 41.0 | 22.16 | 100 | 1850 | 2.5 | 10.7 |

EXAMPLE 7

In this example, experiments were conducted to synthesize copolymers of isobutylene, isoprene and a styrenic monomer selected from the group comprising methyl styrene ( α-MS), p-methyl styrene (p-MS) and styrene (S).

Specifically a reactor was charged with $CH_3Cl$, a specific amount of isobutylene, isoprene, styrenic monomer and CHP, at a temperature of -80 °C. The terpolymerization was initiated by the addition of pure $TiCl_4$ and allowed to proceed with vigorous mixing at -80 °C for 30 minutes. The reactions were then quenched by the addition of prechilled methanol. The polymers were recovered in a manner similar to that described in Example 1. Details, including polymer compositions determined by $^1$H NMR, are given in Table 7.

TABLE 7

| | | |
|---|---|---|
| Monomers | = | isobutylene (IB); 7.91 mole |
| | = | isoprene (IP); 2.37 mole |
| | = | styrenic monomer; 0.79 mole |
| Initiator | = | CHP; $5.6 \times 10^{-3}$ mole |
| Lewis acid | = | $TiCl_4$; $2.0 \times 10^{-2}$ mole |
| Diluent | = | $CH_3Cl$; 2600 g |

| Expt. # | IB | Mole % in the Feed IP | α-MS | p-MS | S | Conv. % | Mole % in the Product IB | IP | α-MS | p-MS | S |
|---|---|---|---|---|---|---|---|---|---|---|---|
| 1 | 77.6 | 14.7 | 7.7 | --- | --- | 100 | 92.1 | 1.0 | 6.9 | -- | |
| 2 | 77.6 | 14.7 | --- | 7.7 | --- | 100 | 91.6 | 1.1 | --- | 7.7 | --- |
| 3 | 77.6 | 14.7 | --- | --- | 7.7 | 100 | 87.0 | 1.0 | --- | --- | 12.0 |

EXAMPLE 8

In this example, three polymerizations of isobutylene in a mixed solvent system were conducted using cumene hydroperoxide (CHP) as the initiator and titanium tetrachloride ($TiCl_4$) as the Lewis acid. In one of the experiments, the electron donor, dimethyl sulfoxide, with a donor number of 29.8 was used and in another the electron donor, diglyme was used. The polymerization temperature was -65 °C and the time of polymerization was one hour. The polymerization parameters and physical properties of the resultant polymers are provided in Table 8.

TABLE 8

| Expt. # | $CH_3Cl$ mL | Hexane mL | IB Mole x$10^2$ | CHP Mole x$10^3$ | $TiCl_4$ Mole x$10^3$ | E.D. Mole x$10^3$ | Conv. % | $M_n$ (GPC) | Mw/Mn |
|---|---|---|---|---|---|---|---|---|---|
| 1 | 87.5 | 37.5 | 17.68 | 1.25 | 4.6 | --- | 100 | 9500 | 1.8 |
| 2 | 87.5 | 37.5 | 17.68 | 1.25 | 4.6 | DMSO 1.25 | 97 | 9350 | 1.4 |
| 3 | 87.5 | 37.5 | 17.68 | 1.25 | 4.6 | Diglyme 1.25 | 95 | 8568 | 1.3 |

The results indicate that the use of an electron donor in the polymerization process leads to the formation of a polyisobutylene having a narrow molecular weight distribution.

EXAMPLE 9

In this Example, a series of polymerizations of isobutylene were conducted at -65 °C using cumene hydroperoxide (CHP) as the initiator, titanium tetrachloride ($TiCl_4$) as the Lewis acid and varying amounts of the electron donor, dimethyl sulfoxide, with an electron donor number of 29.8. In one experiment, no electron donor was used. The polymerization parameters and physical properties of the resultant polymers are provided in Table 9.

TABLE 9

| Expt. # | $CH_3Cl$ mL | Hexane mL | IB Mole x$10^2$ | CHP Mole x$10^4$ | $TiCl_4$ Mole x$10^3$ | DMSO Mole x$10^4$ | Conv. % | $M_n$ (GPC) | Mw/Mn |
|---|---|---|---|---|---|---|---|---|---|
| 1 | 120 | 80 | 17.86 | 2.5 | 7.34 | 5.0 | 95 | 23,800 | 1.2 |
| 2 | 120 | 80 | 17.86 | 2.5 | 7.34 | 5.0 | 95 | 25,315 | 1.25 |
| 3 | 120 | 80 | 17.86 | 2.5 | 7.34 | 2.5 | 98 | 25,900 | 1.4 |
| 4 | 120 | 80 | 17.86 | 2.5 | 7.34 | --- | 100 | 21,438 | 2.0 |

From the results, it can be seen that a polyisobutylene having a narrow molecular weight distribution can be reproducibly formed using the electron donor, dimethyl sulfoxide, with the cumene hydroperoxide/Lewis acid catalyst system.

EXAMPLE 10

In this Example, a series of polymerizations of isobutylene were carried out at -80 °C using cumene hydroperoxide (CHP) as the initiator, titanium tetrachloride ($TiCl_4$) as the Lewis acid, and varying amounts of the electron donor, tetrahydrothiophene. In one experiment, no electron donor was used. The polymerization parameters and physical properties of the resultant polymers are provided in Table 10.

## TABLE 10

| | | |
|---|---|---|
| Monomer | = | Isobutylene; $4.46 \times 10^{-1}$ mole |
| Initiator | = | CHP; $5.2 \times 10^{-4}$ mole |
| Lewis acid | = | $TiCl_4$; $2.6 \times 10^{-3}$ mole |
| Diluent | = | $CH_3Cl$; 250 mL + n-hexane; 100 mL |

| Expt. # | Time Min. | THT mole x $10^5$ | Conv. % | $M_n$ (GPC) | Mw/Mn |
|---|---|---|---|---|---|
| 1 | 45 | --- | 100 | 47,200 | 3.76 |
| 2 | 45 | 2.5 | 100 | 48,500 | 3.46 |
| 3 | 45 | 8.41 | 100 | 43,900 | 2.33 |
| 4 | 45 | 11.22 | 100 | 39,500 | 2.3 |
| 5 | 60 | 16.83 | 100 | 43,000 | 1.28 |
| 6 | 90 | 22.44 | 100 | 40,100 | 1.36 |
| 7 | 90 | 22.44 | 100 | 35,000 | 1.26 |
| 8 | 90 | 22.44 | 100 | 35,000 | 1.24 |
| 9 | 45 | 44.88 | 23 | -- | -- |

From the results, it can be seen that the amount of the electron donor used, relative to the amounts of the initiator and the Lewis acid used, is important in narrowing the molecular weight distribution. The results also demonstrate that with an increase in the amount of electron donor used, the rate of polymerization is decreased and this, of course, favours a narrower molecular weight distribution. However it is also apparent that when too great an amount of the electron donor is used the polymerization process is slowed down such an extent that quantitative conversion cannot be achieved.

EXAMPLE 11

In this Example, a series of experiments were conducted to produce block copolymers of isobutylene and styrene, both in the presence and absence of the electron donor, dimethyl sulfoxide. A series of pressure tubes were each charged with a mixture of 120 mL of $CH_3Cl$ and 80 mL of n-hexane, specific amounts of isobutylene, cumene hydroperoxide (CHP) and dimethyl sulfoxide at a temperature of -80 °C. The polymerizations were initiated by the addition of a specific amount of pure titanium tetrachloride ($TiCl_4$) and were allowed to proceed at -80 °C for 45 minutes with agitation of the pressure tubes. At the end of this time, all the isobutylene had been consumed and the pressure tubes were then each charged with a specific amount of styrene. The copolymerizations were allowed to proceed for a further 60 minutes at -80 °C with agitation and the reactions were then quenched by the addition of 5 ml of prechilled methanol to each tube. The product block copolymers were recovered in a manner similar to that described in Example 1. Characterization of the polymers was as hereinbefore described. The polymerization reaction parameters and the properties of the polymers are provided in Table 11.

## TABLE 11

Monomer = isobutylene; M1 = $1.79 \times 10^{-1}$ mole
= styrene; M2 = as stated, mole
Initiator = CHP; $4.0 \times 10^{-4}$ mole
Lewis acid = $TiCl_4$; $4.6 \times 10^{-3}$ mole
Diluent = $CH_3Cl$; 120 mL + n-hexane; 80 mL

| Expt. # | M2 Mole$\times10^2$ | E.D. (DMSO) Mole$\times10^3$ | $M_n$ (GPC) | Mw/Mn | Mole % PIB | Mole % St |
|---|---|---|---|---|---|---|
| 1 | 4.81 | --- | 19,850 | 2.26 | 95.8 | 4.2 |
| 2 | 4.81 | 0.8 | 34,453 | 1.4 | 78.1 | 21.9 |
| 3 | 4.81 | 0.6 | 38,358 | 1.28 | 79.9 | 20.1 |
| 4 | 4.81 | 0.4 | 33,320 | 1.4 | 79.0 | 21.0 |

DSC measurements on the block copolymer obtained from Experiment #2 showed two glass transition temperatures, the first at -65 ° C, indicative of the rubbery polyisobutylene block and the second at 95 ° C, indicative of the hard polystyrene block.

From these results it can be seen that the use of the electron donor, dimethyl sulfoxide, in the block copolymerization of isobutylene and styrene, leads to the formation of a block copolymer with a narrower molecular weight distribution and furthermore, there is considerably less polystyrene formed in addition to the block copolymer.

EXAMPLE 12

In this Example, two experiments were conducted to produce block copolymers of isobutylene and isoprene, one in the presence and one in the absence of the electron donor, dimethyl sulfoxide. The methodology used was similar to that described in Example 11. Characterization of the polymers was as hereinbefore described. The polymerization reaction parameters and the properties of the polymers are provided in Table 12.

TABLE 12

| | |
|---|---|
| Monomer | = isobutylene; M1 = $2.68 \times 10^{-1}$ mole |
| | = isoprene; M2 = as stated, mole |
| Initiator | = CHP; $1.5 \times 10^{-3}$ mole |
| Lewis acid | = $TiCl_4$; $9.1 \times 10^{-3}$ mole |
| Diluent | = $CH_3Cl$; 218 mL + n-hexane; 202 mL |

| Expt. # | M2 Mole x $10^3$ | E.D. (DMSO) Mole x $10^3$ | $M_n$ (GPC) | Mw/Mn | Mole % PIB | Mole % PIP |
|---|---|---|---|---|---|---|
| 1 | 3.68 | --- | 13,327 | 1.6 | 97.5 | 2.5 |
| 2 | 3.68 | 1.0 | 14,032 | 1.19 | 97.6 | 2.4 |

The NMR analysis of the block copolymer obtained from Experiment 2 has shown that some of the isoprene in the polyisoprene block has lost its unsaturation and formed cyclized polyisoprene. This is not unexpected in view of the excess Lewis acid present.

The results demonstrate that the use of the electron donor, diethyl sulfoxide in the block copolymerization of isobutylene and isoprene gives rise to a block copolymer with a narrower molecular weight distribution.

EXAMPLE 13

In this Example, a series of polymerizations of isobutylene was carried out using the initiator 2,5-dimethyl-2,5-bis(benzoyl peroxyhexane) (LUPEROX® 118) and the Lewis acid titanium tetrachloride ($TiCl_4$) and varying the solvent and the temperature. The polymerization reaction parameters and the properties of the polymers are provided in Table 13.

TABLE 13

| Expt. # | $CH_3Cl$ mL | Hexane mL | IB mole | LUPEROX® mole x$10^3$ | $TiCl_4$ mole x$10^2$ | Temp - °C | $M_n$ | Mw/Mn | Conv. % |
|---|---|---|---|---|---|---|---|---|---|
| 1 | 600 | 400 | 1.0 | 1.0 | 1.82 | 70 | 54,359 | 1.13 | 95 |
| 2 | 500 | 334 | 0.9 | 1.1 | 1.82 | 75 | 47,115 | 1.15 | 100 |
| 3 | 700 | 300 | 1.0 | 1.12 | 1.82 | 80 | 43,525 | 1.20 | 90 |
| 4 | 500 | 345 | 1.0 | 1.18 | 1.82 | 80 | 49,500 | 1.08 | 95 |
| 5. | 500 | 350 | 0.9 | 1.1 | 1.36 | 65 | 43,877 | 1.21 | 90 |

From the results, it can be seen that by using 2,5-dimethyl-2,5-bis(benzoyl peroxyhexane)/Lewis acid catalyst system for the polymerization of isobutylene, it is possible to produce a polyisobutylene for which the ratio of weight average molecular weight to number average molecular weight approaches 1. Furthermore as demonstrated by Experiment #1, the molecular weight of the polymer is approximately given by

the expression

$(M_o/I_o) \times IB_m$

where $M_o$ is the initial concentration of monomer; $I_o$ is the initial concentration of the peroxy ester and $IB_m$ is the molecular weight of the monomer, thereby indicating that the polymerization of isobutylene is a truly living process.

Example 14

In this Example, a series of experiments was conducted to produced copolymers of isobutylene and styrene using the initiator 2,5-dimethyl-2,5-bis(benzoylperoxyhexane) (LUPEROX® 118) and the Lewis acid titanium tetrachloride ($TiCl_4$). A series of two-necked round bottom flasks, each equipped with a mechanical stirrer and a rubber septum, were each charged with diluent (as indicated), 15 grams of isobutylene and a specific amount of LUPEROX® 118, as the indicated temperatures. Polymerization of the isobutylene was initiated by the addition of the specified amount of pure $TiCl_4$. Incremental addition of 5 gram aliquots of isobutylene were then made every 10 minutes to each flask, until all the isobutylene had been consumed. Specific amounts of styrene were then added to the living polyisobutylene dications in each flask and the polymerizations were allowed to proceed at the indicated temperatures for 120 minutes. The reactions were then quenched by the addition of 5 ml of prechilled methanol to each flask. The product block copolymers were recovered in a manner similar to that described in Example 1 and were then extracted with ethyl acetate in order to remove any homopolystyrene formed. The polymerization reaction parameters and the properties of the polymers are provided in Table 14.

**Table 14**

Initiator = LUPEROX® 118 ; $2.08 \times 10^{-3}$ mole (Experiment 1)

= LUPEROX® 118 ; $2.07 \times 10^{-3}$ mole (Experiment 2)

= LUPEROX® 118 ; $9.0 \times 10^{-4}$ mole (Experiment 3)

Lewis acid = $TiCl_4$ ; $2.3 \times 10^{-2}$ mole

Diluent = $CH_3Cl$ ; 436 mL + n-hexane ; 150 mL (Expt. 1&2)

= $CH_3Cl$ ; 196 mL + n-hexane ; 160 mL (Expt. 3)

| Expt. # | IB mole | Styrene mole$\times10^{-1}$ | Temp. °C. | Mn (GPC) | $M_w/M_n$ | Mole % PIB | Mole % PSt |
|---|---|---|---|---|---|---|---|
| 1 | 1.20 | 3.15 | -80° | 47,282 | 1.4 | 80.0 | 19.4 |
| 2 | 1.16 | 3.15 | -70° | 37,378 | 1.5 | 83.0 | 17.0 |
| 3 | 0.48 | 2.35 | -70° | 50,433 | 1.5 | 75.0 | 25.0 |

Example 15

In this Example, two experiments were carried out to produce block copolymers of isobutylene and isoprene using the initiator 2,5-dimethyl-2,5-bis(benzoylperoxyhexane) (LUPEROX® 118) and the Lewis acid titanium tetrachloride ($TiCl_4$). Experiment 1 was conducted using the methodology described in Example 14. Experiment 2 was carried out by charging a two-necked round bottom flask equipped with a mechanical stirrer and rubber septum with the specified amounts of the diluent, isobutylene and LUPEROX® 118 at -65 °C. Polymerization of the isobutylene was initiated by the addition of the specified amount of pure $TiCl_4$. After 120 minutes when all the isobutylene had been consumed, the specified amount of isoprene was added and polymerization was allowed to proceed for a further 60 minutes. The reaction was then quenched by the addition of 5 ml of prechilled methanol. The product block copolymer was then recovered in a manner similar to that described in Example 1.

The polymerization parameters and the properties of the polymers obtained in the two experiments are provided in Table 15.

## Table 15

Initiator = LUPEROX® 118 ; 0.98 mole (Experiment 1)
= LUPEROX® 118 ; 1.5 mole (Experiment 2)
Lewis acid = $TiCl_4$ ; 2.3 x $10^{-2}$ mole
Diluent = $CH_3Cl$ ; 218 mL + n-hexane ; 150 mL (Expt. 1)
= $CH_3Cl$ ; 435 mL + n-hexane ; 160 mL (Expt. 2)

| Expt. # | IB mole | Isoprene mole | Temp. °C | Mn | $M_w/M_n$ | Mole % IB | Mole % PIP |
|---|---|---|---|---|---|---|---|
| 1 | 0.71 | 0.2 | -70 | 52,713 | 1.55 | 98.5 | 1.5 |
| 2 | 1.16 | 0.3 | -65 | 32,000 | 1.6 | 94.7 | 5.3 |

Analysis of the block copolymers by GPC has demonstrated that the block copolymers produced by the "incremental monomer addition" technique or by the "all monomer in" technique have a narrow molecular weight distribution that is monomodal.

Example 16

In this Example, one experiment was carried out to produce a block copolymer of isobutylene and styrene and a second experiment was carried out to produce a block copolymer of isobutylene and 2,4,6-trimethylstyrene. In both experiments the initiator used was 2,5-dimethyl-2,5-bis(benzoyl peroxy hexane) (LUPEROX® 118), the Lewis acid was titanium tetrachloride ($TiCl_4$) and the polymerization temperature was -80 °C. The methodology used was similar to that described in Example 11.

Table 16

**Initiator** = LUPEROX® 118 ; 2.6 X $10^{-2}$ mole (Experiment 1)

= LUPEROX® 118 ; 5.2 X $10^{-2}$ mole (Experiment 2)

**Diluent** = $CH_3Cl$ ; 436 mL + n-hexane ; 150 mL (Expt. 1)

= $CH_3Cl$ ; 218 mL + n-hexane ; 202 mL (Expt. 2)

| Expt. # | IB mole X10 | Styrene mole X10 | TiCl4 X 102 | Mn | $M_w/M_n$ | Mole % PIB | Mole % PSt |
|---|---|---|---|---|---|---|---|
| 1 | 7.14 | 3.50 | 2.5 | 38,288 | 1.7 | 70 | 30 |
| 2 | 2.68 | 0.31 (2,4,6-trimethyl) | 1.5 | 32,850 | 1.32 | 93.9 | 6.1 |

## Claims

1. A living cationic polymerisation process for producing a terminally-functional polymer, which comprises polymerising, at 0 to -80°C, a monomer charge comprising isobutylene, in the presence of a Lewis acid and, in an amount of from $10^{-4}$ to $10^{-1}$ moles per mole of the isobutylene, an organic peroxy compound.

2. The process of claim 1, wherein the organic peroxy compound is a peroxide or a hydroperoxide.

3. The process of claim 1, wherein the organic peroxy compound is selected from 1,1,3,3-tetramethylbutyl hydroperoxide, t-butyl hydroperoxide, cumene hydroperoxide, 2,5-dimethyl-2,5-di(t-butylperoxy)hexane, di(t-butyl) peroxide, t-butyl cumyl peroxide, dicumyl peroxide, t-amyl hydroperoxide, 2,5-di-(hydroperoxy)-2,5-dimethylhexane, 3,3-dimethyl-2-methylhydroperoxy-1-butene, 2,7-di(hydroperoxy)-2,7-dimethyloctane, diphenylhydroperoxymethane, benzyl hydroperoxide, p-methylhydroperoxytoluene, p-dicumyl dihydroperoxide, 1-isopropyl-3,5-dicumyl dihydroperoxide, cumyl methyl peroxide, triphenylmethyl hydroperoxide and bis(m-2-hydroperoxy-2-propyl-α-cumyl) peroxide.

4. The process of claim 2 or claim 3, which is conducted in the additional presence of, in an amount of $10^{-4}$ to $10^{-1}$ moles per mole of the isobutylene, an electron donor having an electron donor number of 22 to 50 or tetrahydrothiophene.

5. The process of claim 1, wherein the organic peroxy compound is O,O-t-butyl-O-isopropylmonoperoxycarbonate, O,O-t-butyl-O-(2-ethylhexyl)monoperoxycarbonate, t-butylperoxy-4-t-butylazo-4-cyanovalerate, α-cumylperoxypivalate, α-cumylperoxyneoheptanoate or 2,5-dimethyl-2,5-bis-(benzoylperoxyhexane).

6. The process of any preceding claim, wherein the monomer charge additionally comprises up to 50 mole % of a $C_{4-8}$ diolefin.

7. The process of claim 6, wherein the diolefin is isoprene.

8. The process of any preceding claim, wherein the monomer charge additionally comprises up to 20 mole % of a $c_{8-20}$ vinylidene monomer.

9. The process of claim 8, wherein the vinylidene monomer is styrene, $\alpha$-methylstyrene or p-methylstryene.

10. The process of any of claims 1 to 5, wherein said monomer charge comprises the sequential addition of a first charge of isobutylene and a second charge of a $C_{4-8}$ diolefin and/or a $C_{8-20}$ vinylidene monomer.

11. The process of claim 10, wherein the second charge comprises isoprene in an amount of up to 60 mole % of the total monomer charge.

12. The process of claim 10, wherein the second charge comprises the vinylidene monomer in an amount of up to 60 mole % of the total monomer charge.

13. The process of claim 12, wherein the vinylidene monomer is styrene, p-methylstyrene, 2,4,6-trimethylstyrene or indene.

14. The process of any of claims 4 and 10 to 13, wherein the polymerisation is conducted at -40 to -80 °C.

15. The process of any preceding claim, which is conducted in the presence of a diluent which is a $C_{1-4}$ halogenated hydrocarbon, a $C_{5-8}$ aliphatic hydrocarbon, a $C_{5-10}$ cyclic hydrocarbon, a mixture of such halogenated hydrocarbons, a mixture of such a halogenated hydrocarbon and such an aliphatic hydrocarbon, or a mixture of such a halogenated hydrocarbon and such a cyclic hydrocarbon.

16. The process of claim 15, wherein the diluent is selected from methyl chloride, methylene chloride, hexane, cyclohexane and mixtures thereof.

17. The process of any preceding claim, wherein the Lewis acid is selected from $BCl_3$, $BF_3$, $AlCl_3$, $SnCl_4$, $TiCl_4$, $SbF_5$, $SeCl_3$, $ZnCl_2$, $FeCl_3$ and $VCl_4$.

18. The process of claim 17, wherein the Lewis acid is $BCl_3$ or $TiCl_4$.

19. The process of claim 1, wherein the monomer charge is a mixture of isobutylene and isoprene, the amount of isoprene being up to 10 mole % of the total monomer charge; the peroxy compound is cumene hydroperoxide or t-butyl hydroperoxide; and the Lewis acid is $BCl_3$ or $TiCl_4$ in an amount of 3 to 40 moles per mole of the peroxy compound; and which is conducted in the presence of a diluent selected from methyl chloride, methylene chloride, pentane, hexane, heptane and mixtures thereof.

20. The process of claim 13, wherein the peroxy compound is a-cumylperoxypivalate, $\alpha$-cumylperoxyneoheptanoate or 2,5-dimethyl-2,5-bis-(benzoylperoxyhexane); and the Lewis acid is $BCl_3$ or $TiCl_4$, in an amount of 3 to 40 moles per mole of the peroxy compound; and which is conducted in the presence of a diluent selected from methyl chloride, methylene chloride, hexane, cyclohexane and mixtures thereof.

21. The process of claims 4 and 13, wherein the peroxy compound is cumene hydroperoxide or p-dicumyl dihydroperoxide; the electron donor is diglyme or tetrahydrothiophene, in an amount of 0.2 to 3 moles per mole of the peroxy compound; and the Lewis acid is $BCl_3$ or $TiCl_4$, in an amount of 3 to 40 moles per mole of the peroxy compound; and which is conducted in the presence of a diluent selected from methyl chloride, methylene chloride, hexane, cyclohexane and mixtures thereof.

**Patentansprüche**

1. Verfahren zur lebendigen (theoretisch endlosen) kationischen Polymerisation zur Herstellung eines terminal funktionellen Polymers, umfassend die Polymerisation einer Monomerenbeschickung, umfassend Isobutylen, in Gegenwart einer Lewis-Säure und, in einer Menge von $10^{-4}$ bis $10^{-1}$ mol pro Mol Isobutylen, einer organischen Peroxy-Verbindung bei 0 bis -80 °C.

2. Verfahren nach Anspruch 1, wobei die organische Peroxy-Verbindung ein Peroxid oder ein Hydroperoxid ist.

3. Verfahren nach Anspruch 1, wobei die organische Peroxy-Verbindung ausgewählt ist aus 1,1,3,3-Tetramethylbutylhydroperoxid, t-Butylhydroperoxid, Cumolhydroperoxid, 2,5-Dimethyl-2,5-di(t-butylperoxy)hexan, Di-t-butylperoxid, t-Butylcumylperoxid, Dicumylperoxid, t-Amylhydroperoxid, 2,5-Di-(hydroperoxy)-2,5-dimethylhexan, 3,3-Dimethyl-2-methylhydroperoxy-1-buten, 2,7-Di(hydroperoxy)-2,7-dimethyloctan, Diphenylhydroperoxymethan, Benzylhydroperoxid, p-Methylhydroperoxytoluol, p-Dicumyldihydroperoxid, 1-Isopropyl-3,5-dicumyldihydroperoxid, Cumylmethylperoxid, Triphenylmethylhydroperoxid und Bis(m-2-hydroperoxy-2-propyl-$\alpha$-cumyl)peroxid.

4. Verfahren nach Anspruch 2 oder 3, das durchgeführt wird in der weiteren Gegenwart, in einer Menge von $10^{-4}$ bis $10^{-1}$ mol pro Mol Isobutylen, eines Elektronendonors mit einer Elektronendonorzahl von 22 bis 50 oder Tetrahydrothiophen.

5. Verfahren nach Anspruch 1, wobei die organische Peroxy-Verbindung O,O-t-Butyl-O-isopropylmonoperoxycarbonat, O,O-t-Butyl-O-(2-ethylhexyl)monoperoxycarbonat, t-Butylperoxy-4-t-butylazo-4-cyanvalerat, $\alpha$-Cumylperoxypivalat, $\alpha$-Cumylperoxyneoheptanoat oder 2,5-Dimethyl-2,5-bis-(benzoylperoxyhexan).

6. Verfahren nach irgendeinem der vorstehenden Ansprüche, wobei die Monomerenbeschickung zusätzlich bis zu 50 Mol-%. eines $C_{4-8}$-Diolefins umfaßt.

7. Verfahren nach Anspruch 6, wobei das Diolefin Isopren ist.

8. Verfahren nach irgendeinem der vorstehenden Ansprüche, wobei die Monomerenbeschickung zusätzlich bis zu 20 Mol-% eines $C_{8-20}$Vinyliden-Monomers umfaßt.

9. Verfahren nach Anspruch 8, wobei das Vinyliden-Monomer Styrol, $\alpha$-Methylstyrol oder p-Methylstyrol ist.

10. Verfahren nach irgendeinem der Ansprüche 1 bis 5, wobei die Monomerenbeschickung die aufeinanderfolgende Zugabe einer ersten Beschickung mit Isobutylen und einer zweiten Beschickung eines $C_{4-8}$-Diolefins und/oder eines $C_{8-20}$-Vinyliden-Monomers umfaßt.

11. Verfahren nach Anspruch 10, wobei die zweite Beschickung Isopren in einer Menge von bis zu 60 Mol-% der gesamten Monomerenbeschickung umfaßt.

12. Verfahren nach Anspruch 10, wobei die zweite Beschickung das Vinyliden-Monomer in einer Menge von bis zu 60 Mol-% der gesamten Monomerenbeschickung umfaßt.

13. Verfahren nach Anspruch 12, wobei das Vinyliden-Monomer Styrol, p-Methylstyrol, 2,4,6-Trimethylstyrol oder Inden ist.

14. Verfahren nach irgendeinem der Ansprüche 4 und 10 bis 13, wobei die Polymerisation bei -40 bis -80 °C durchgeführt wird.

15. Verfahren nach irgendeinem der vorstehenden Ansprüche, das durchgeführt wird in Gegenwart eines Verdünnungsmittels, bei dem es sich um einen halogenierten $C_{1-4}$-Kohlenwasserstoff, einen aliphatischen $C_{5-8}$-Kohlenwasserstoff, einen cyclischen $C_{5-10}$-Kohlenwasserstoff, eine Mischung derartiger halogenierter Kohlenwasserstoffe, eine Mischung aus einem solchen halogenierten Kohlenwasserstoff und einem solchen aliphatischen Kohlenwasserstoff oder eine Mischung aus einem solchen halogenierten Kohlenwasserstoff und einem solchen cyclischen Kohlenwasserstoff handelt.

16. Verfahren nach Anspruch 15, wobei das Verdünnungsmittel ausgewählt ist aus Methylchlorid, Methylenchlorid, Hexan, Cyclohexan und deren Mischungen.

**17.** Verfahren nach irgendeinem der vorstehenden Ansprüche, wobei die Lewis-Säure ausgewählt ist aus $BCl_3$, $BF_3$, $AlCl_3$, $SnCl_4$, $TiCl_4$, $SbF_5$, $SeCl_3$, $ZnCl_2$, $FeCl_3$ und $VCl_4$.

**18.** Verfahren nach Anspruch 17, wobei die Lewis-Säure $BCl_3$ oder $TiCl_4$ ist.

**19.** Verfahren nach Anspruch 1, wobei die Monomerenbeschickung eine Mischung aus Isobutylen und Isopren ist, die Menge Isopren sich auf bis zu 10 Mol-% der gesamten Monomerenbeschickung beläuft; die Peroxy-Verbindung Cumolhydroperoxid oder t-Butylhydroperoxid ist; und die Lewis-Säure $BCl_3$ oder $TiCl_4$ in einer Menge von 3 bis 40 mol pro Mol Peroxy-Verbindung ist; welches durchgeführt wird in Gegenwart eines Verdünnungsmittels, ausgewählt aus Methylchlorid, Methylenchlorid, Pentan, Hexan, Heptan und deren Mischungen.

**20.** Verfahren nach Anspruch 13, wobei die Peroxy-Verbindung α-Cumylperoxypivalat, α-Cumylperoxyneoheptanoat oder 2,5-Dimethyl-2,5-bis(benzoylperoxyhexan) ist; die Lewis-Säure $BCl_3$ oder $TiCl_4$ in einer Menge von 3 bis 40 mol pro Mol Peroxy-Verbindung ist; welches durchgeführt wird in Gegenwart eines Verdünnungsmittels, ausgewählt aus Methylchlorid, Methylenchlorid, Hexan, Cyclohexan und deren Mischungen.

**21.** Verfahren nach den Ansprüchen 4 und 13, wobei die Peroxy-Verbindung Cumolhydroperoxid oder p-Dicumyldihydroperoxid ist; der Elektronendonor Diglyme oder Tetrahydrothiophen ist, in einer Menge von 0,2 bis 3 mol pro Mol Peroxy-Verbindung; und die Lewis-Säure $BCl_3$ oder $TiCl_4$ in einer Menge von 3 bis 40 mol pro Mol Peroxy-Verbindung ist; welches durchgeführt wird in Gegenwart eines Verdünnungsmittels, ausgewählt aus Methylchlorid, Methylenchlorid, Hexan, Cyclohexan und deren Mischungen.

## Revendications

**1.** Procédé de polymérisation cationique pour la production d'un polymère vivant à fonctionnalité terminale, qui comprend la polymérisation, à une température de 0 à -80 °C, d'une charge de monomères comprenant de l'isobutylène, en présence d'un acide de Lewis et, en une quantité de $10^{-4}$ à $10^{-1}$ mole par mole de l'isobutylène, d'un composé organique à fonction peroxy.

**2.** Procédé suivant la revendication 1, dans lequel le composé organique à fonction peroxy est un peroxyde ou un hydroperoxyde.

**3.** Procédé suivant la revendication 1, dans lequel le composé organique à fonction peroxy est choisi entre l'hydroperoxyde de 1,1,3,3-tétraméthylbutyle, l'hydroxyperoxyde de tertiobutyle, l'hydroperoxyde de cumène, le 2,5-diméthyl-2,5-di(tertiobutylperoxy)hexane, le peroxyde de di(tertiobutyle), le peroxyde de tertiobutylcumyle, le peroxyde de dicumyle, l'hydroperoxyde de tertioamyle, le 2,5-di(hydroperoxy)-2,5-diméthylhexane, le 3,3-diméthyl-2-méthylhydroperoxy-1-butène, le 2,7-di(hydroperoxy)2,7-diméthyloctane, le diphénylhydroperoxyméthane, l'hydroperoxyde de benzyle, le p-méthylhydroperoxytoluène, le dihydroperoxyde de p-dicumyle, le dihydroperoxyde de 1-isopropyl-3,5-dicumyle, le peroxyde de cumylméthyle, l'hydroperoxyde de triphénylméthyle et le peroxyde de bis(m-2-hydroperoxy-2-propyl-α-cumyle).

**4.** Procédé suivant la revendication 2 ou la revendication 3, qui est mis en oeuvre en la présence supplémentaire, en une quantité de $10^{-4}$ à $10^{-1}$ mole par mole de l'isobutylène, d'un donneur d'électrons ayant un nombre de cession d'électrons de 22 à 50, ou de tétrahydrothiophène.

**5.** Procédé suivant la revendication 1, dans lequel le composé organique à fonction peroxy est le monoperoxycarbonate de O,O-tertiobutyl-O-isopropyle, le monoperoxycarbonate de O,O-tertiobutyl-O-(2-éthylhexyle), le peroxy-4-tertiobutylazo-4-cyanovalérate de tertiobutyle, le peroxypivalate d'α-cumyle, le peroxynéoheptanoate d'α-cumyle ou le 2,5-diméthyl-2,5-bis(benzoylperoxyhexane).

**6.** Procédé suivant l'une quelconque des revendications précédentes, dans lequel la charge de monomères comprend en outre jusqu'à 50 moles % d'une dioléfine en $C_4$ à $C_8$.

**7.** Procédé suivant la revendication 6, dans lequel la dioléfine est l'isoprène.

**8.** Procédé suivant l'une quelconque des revendications précédentes, dans lequel la charge de monomères comprend en outre jusqu'à 20 moles % d'un monomère vinylidène en $C_8$ à $C_{20}$.

**9.** Procédé suivant la revendication 8, dans lequel le monomère vinylidène est le styrène, l'α-méthylstyrène ou le p-méthylstyrène.

**10.** Procédé suivant l'une quelconque des revendications 1 à 5, dans lequel la charge de monomères est ajoutée par addition séquentielle d'une première charge d'isobutylène et d'une seconde charge d'une dioléfine en $C_4$ à $C_8$ et/ou d'un monomère vinylidène en $C_8$ à $c_{20}$.

**11.** Procédé suivant la revendication 10, dans lequel la seconde charge comprend de l'isoprène en une quantité allant jusqu'à 60 moles % de la charge totale de monomères.

**12.** Procédé suivant la revendication 10, dans lequel la seconde charge comprend le monomère vinylidène en une quantité allant jusqu'à 60 moles % de la charge totale de monomères.

**13.** Procédé suivant la revendication 12, dans lequel le monomère vinylidène est le styrène, le p-méthylstyrène, le 2,4,6-triméthylstyrène ou l'indène.

**14.** Procédé suivant l'une quelconque des revendications 4 et 10 à 13, dans lequel la polymérisation est conduite à une température de -40 à -80 °C.

**15.** Procédé suivant l'une quelconque des revendications précédentes, qui est mis en oeuvre en présence d'un diluant qui est un hydrocarbure halogéné en $C_1$ à $C_4$, un hydrocarbure aliphatique en $C_5$ à $C_8$, un hydrocarbure cyclique en $C_5$ à $C_{10}$, un mélange de tels hydrocarbures halogénés, un mélange d'un tel hydrocarbure halogéné et d'un tel hydrocarbure aliphatique, ou un mélange d'un tel hydrocarbure halogéné et d'un tel hydrocarbure cyclique.

**16.** Procédé suivant la revendication 15, dans lequel le diluant est choisi entre le chlorure de méthyle, le chlorure de méthylène, l'hexane, le cyclohexane et leurs mélanges.

**17.** Procédé suivant l'une quelconque des revendications précédentes, dans lequel l'acide de Lewis est choisi entre $BCl_3$ $BF_3$, $AlCl_3$, $SnCl_4$, $TiCl_4$, $SbF_5$, $SeCl_3$, $ZnCl_2$, $FeCl_3$ et $VCl_4$.

**18.** Procédé suivant la revendication 17, dans lequel l'acide de Lewis est $BCl_3$ ou $TiCl_4$.

**19.** Procédé suivant la revendication 1, dans lequel la charge de monomères est un mélange d'isobutylène et d'isoprène, la quantité d'isoprène allant jusqu'à 10 moles % de la charge totale de monomères ; le composé à fonction peroxy est l'hydroperoxyde de cumène ou l'hydroperoxyde de tertiobutyle ; et l'acide de Lewis est $BCl_3$ ou $TiCl_4$ en une quantité de 3 à 40 moles par mole du composé à fonction peroxy ; et qui est mis en oeuvre en présence d'un diluant choisi entre le chlorure de méthyle, le chlorure de méthylène, le pentane, l'hexane, l'heptane et leurs mélanges.

**20.** Procédé suivant la revendication 13, dans lequel le composé à fonction peroxy est le peroxypivalate d'α-cumyle, le peroxynéoheptanoate d'α-cumyle ou le 2,5-diméthyl-2,5-bis-(benzoylperoxyhexane) ; et l'acide de Lewis est $BCl_3$ ou $TiCl_4$, en une quantité de 3 à 40 moles par mole du composé à fonction peroxy ; et qui est mis en oeuvre en présence d'un diluant choisi entre le chlorure de méthyle, le chlorure de méthylène, l'hexane, le cyclohexane et leurs mélanges.

**21.** Procédé suivant les revendications 4 et 13, dans lequel le composé à fonction peroxy est l'hydroperoxyde de cumène ou le dihydroperoxyde de p-dicumyle ; le donneur d'électrons est le diglyme ou le tétrahydrothiophène, en une quantité de 0,2 à 3 moles par mole du composé à fonction peroxy ; et l'acide de Lewis est $BCl_3$ ou $TiCl_4$, en une quantité de 3 à 40 moles par mole du composé à fonction peroxy ; et qui est mis en oeuvre en présence d'un diluant choisi entre le chlorure de méthyle, le chlorure de méthylène, l'hexane, le cyclohexane et leurs mélanges.